# EUROPEAN PATENT SPECIFICATION

(11) **EP 0 509 173 B1**
(45) Date of publication and mention of the grant of the patent: **28.06.1995**
(21) Application number: 91307892.9
(22) Date of filing: 28.08.1991
(51) Int. Cl.: F16B 25/00

(54) **Tapping screw**
Selbstbohrende Schraube
Vis autoperceuse

(30) Priority: 15.04.1991 JP 25013/91 U; 10.06.1991 JP 43094/91 U
(43) Date of publication of application: 21.10.1992
(73) Proprietor: WAKAI & CO., LTD., Higashiosaka-shi, Osaka (JP)
(72) Inventor: Wakai, Takao, c/o Wakai & Co., Ltd., Higashiosaka-shi, Osaka (JP)
(74) Representative: Burke, Steven David

(56) References cited:
- DE-C- 3 126 355
- FR-A- 1 310 858
- US-A- 2 956 470

## Description

This invention relates to a tapping screw and more specifically a tapping screw for use e.g. in securing an outer wall to a light gage shape steel of a steel structure.

A conventional tapping screw used for such a purpose has a screw shaft provided at its tip with a drill portion having substantially the same outer diameter as that of the shank of the screw shaft. By thrusting the tapping screw, the drill portion will penetrate through the outer wall and drill a starting hole in the light gage shape steel. The screw shaft is then threaded into the starting hole while forming threads thereon until the outer wall is clamped tightly by the head of the screw.

The resistance encountered when drilling a starting hole for the tapping screw is proportional to the diameter of the drill portion. Thus, the larger the shaft diameter, the larger thrust is needed for threading. In a conventional tapping screw, the shank of a screw shaft and the drill portion have substantially the same outer diameters. Thus, the drill portion has a rather large diameter. If the tapping screw has a large diameter, e.g. 6 mm, then a large thrust has to be exerted on the screw for threading. This worsens the working efficiency.

Further, threading of the tapping screws is frequently done at a high place. Threading screws with a large thrust at a high place involves great danger. Also, it would be difficult for a worker to thread a screw with such a large thrust over his head. Thus, clamping work will be difficult.

Reference is made to EP-A-0407093 which describes a winged self-drilling and thread forming fastener for fastening a first softer workpiece, such as wood, to a second harder workpiece, such as metal.

It is an object of this invention to provide a tapping screw with which the resistance when drilling a starting hole is small, which can be threaded with a small thrust even if the screw diameter is large and with which clamping work can be carried out efficiently at any place.

In accordance with the present invention, there is provided a tapping screw comprising a screw shaft and a drill portion at the tip of the screw, the screw shaft carrying a screw thread and the drill portion having at least two coaxial sub-portions having different diameters which decrease towards the tip of the tapping screw, characterised in that the outer diameter of the drill sub-portion which has the largest diameter is smaller than the outer diameter of the screw thread.

By threading the screw into a light gage shape steel, the small-diameter drill portion at the tip drills a small-diameter starting hole. Then the diameter of the starting hole is expanded by the large-diameter drill portion to the diameter of the screw shaft. The screw shaft is then thrust into the starting hole thus formed while forming the threads thereon.

In forming the starting hole, since the drill at the tip has a small diameter, resistance is low. Thus the screw can bite into the hole effectively. The large-diameter drill is thrust into the small-diameter hole while chipping off the surrounding wall thereof. Thus, no large thrust is needed in forming the starting hole. This improves the efficiency of clamping work.

According to this invention, there are provided a large-diameter drill portion at the tip of the screw shaft and a small-diameter drill portion at the tip of the large-diameter drill portion. These drill portions have different drill angles from each other. Thus, a starting hole can be drilled in two steps, so that even a large-diameter screw can be threaded with a small thrust. This ensures smooth clamping work even at a high place.

Also, since the threading work can be carried out in a short time, the working efficiency improves.

Other features and objects of the present invention will become apparent from the following description taken with reference to the accompanying drawings, in which:
Fig. 1 is a front view of the first embodiment of this invention;
Fig. 2 is a bottom plan view of the same;
Fig. 3 is an enlarged view of the drill portion;
Fig. 4 is a view illustrating the initial stage of the step of forming a starting hole with the drill portion;
Fig. 5 is a view showing how a starting hole is being formed by the large-diameter drill portion;
Fig. 6 is a view illustrating how a starting hole is formed when the drill portion at the tip is long;
Fig. 7 is a view illustrating how a starting hole is formed when the large-diameter drill portion has a large drill angle;
Fig. 8 is a front view of the second embodiment;
Fig. 9 is a bottom plan view of the drill portion of the same; and
Fig. 10 is a perspective view of the drill portion.

The embodiments of this invention are now described with reference to the accompanying drawings.

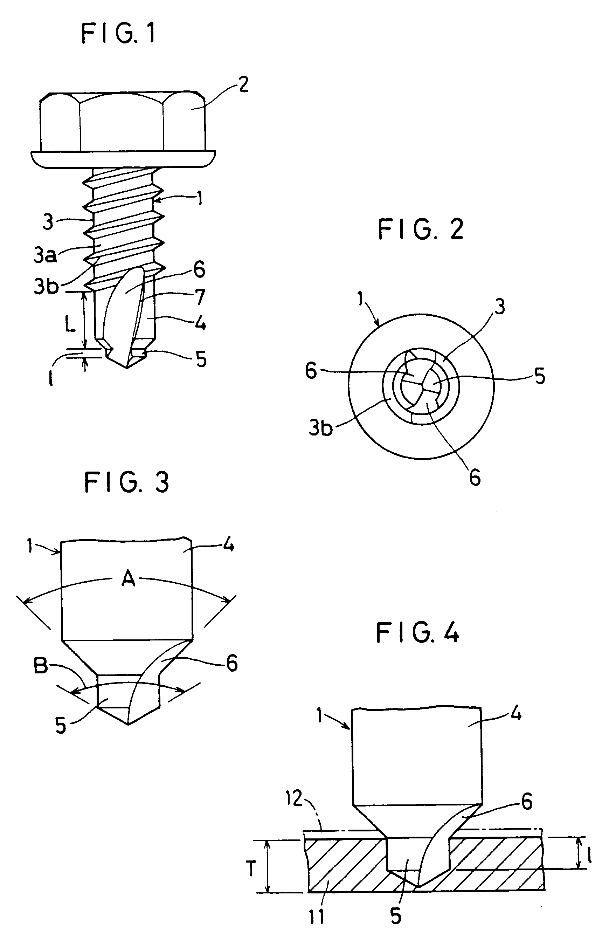

As shown in Figs. 1 - 3, the tapping screw 1 has a screw shaft 3 having a head 2 and a large-diameter drill portion 4 formed at the tip of the screw shaft 3 and a small-diameter drill portion 5 formed at the tip of the large-diameter drill portion 4. The large-diameter drill portion 4 has a drill angle A which differs from the drill angle B of the drill 5 at the tip. (Fig. 3)

The screw shaft 3 comprises a circular shaft 3a and screws 3b provided on the outer periphery of the circular shaft 3a. Its diameter and longitudinal length may be determined according to the conditions of an outer wall 12 to be secured to a light gage shape steel. The head 2 is shown to be a flanged hexagonal head. But it may be a circular or truncated conical one and may have a groove for receiving a driver.

The large-diameter drill portion 4 is formed at the tip of the circular shaft 3a of the screw shaft 3 so as to be integral with and concentrical with the circular shaft and has substantially the same outer diameter as the circular shaft 3a. As shown in Fig. 4, its length L is e.g. larger than the thickness T of a light gage shape steel 11.

The small-diameter tip drill portion 5 is formed at the tip of the large-diameter drill 4 so as to be integral with and concentrical with the large-diameter drill portion. Its length ℓ should be not more than 2.3 mm in view of the thickness T of the light gage shape steel as will be hereinafter described. Its diameter may be determined freely according to the diameter of the large-diameter drill portion 4.

The tip drill portion 5 and the large-diameter drill portion 4 are provided with cutouts 6 in the outer periphery thereof at opposite sides with respect to the axis of the screw, each cutout 6 extending continuously from the tip drill portion 5 to the large-diameter drill portion 4. The edge of each cutout 6 located at the rear with respect to the screwing direction of the tapping screw 1 is formed as a cutting edge 7.

The drill angle B of the tip drill 5 should be 120 ± 5 degrees, within which range the drill 5 can bite into the light gage shape steel 11 most effectively. The drill angle A of the large-diameter drill portion 4 has to be smaller than the drill angle B of the tip drill portion 5 and should preferably be smaller than 90 degrees as will be described later.

In operation, the tip drill portion of the tapping screw of this embodiment is pressed against the outer wall 12 held in contact with the light gage shape steel 11 and thrust and rotation are given to the tapping screw 1. The tip drill portion 5 penetrates through the outer wall 12 and bites into the light gage shape steel 11, drilling a small-diameter starting hole. Then the large-diameter drill portion 4 will chip off the surrounding wall of the small-diameter starting hole, thus forming a large-diameter starting hole.

Since the resistance encountered when forming a starting hole with the tapping screw 1 is proportional to the diameter of the drill portion and since the tip drill portion 5 has a small diameter, the resistance at the initial stage of drilling can be kept small. Also, the large-diameter drill portion 4 serves merely to chip off the surrounding wall of the small-diameter starting hole, so that the resistance at this stage of drilling is small, too. As a result, the starting hole can be formed with a small thrust and even a large-diameter screw can be threaded smoothly.

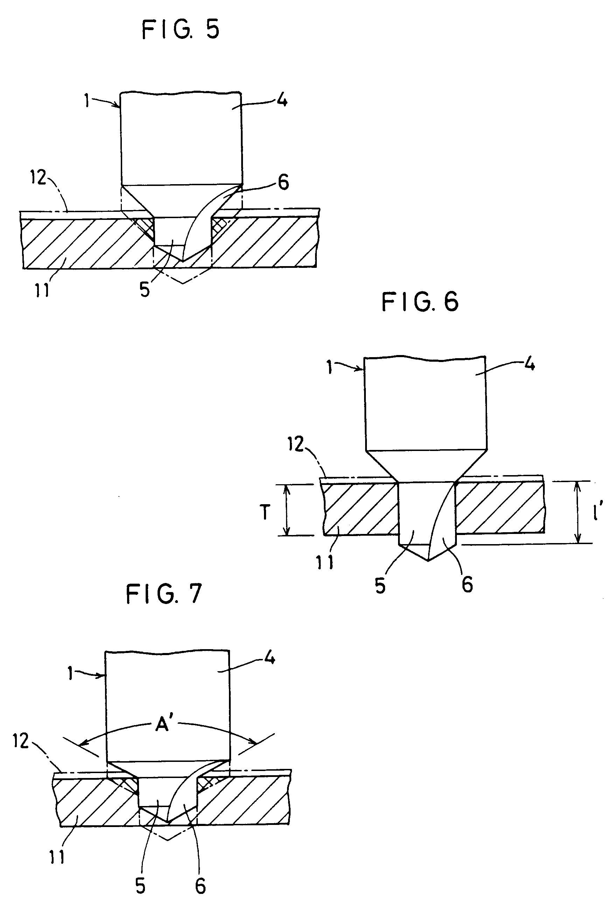

In drilling a small-diameter starting hole with the small-diameter tip drill portion 5, if its length ℓ' is larger than the thickness T of the light gage shape steel 11 as shown in Fig. 6, the large-diameter drill portion 4 would collide with the light gage shape steel 11 only after the tip drill portion 5 has completely penetrated the light gage shape steel 11.

If, as described above, the tip drill portion 5 passes through the shape steel 11 before the large-diameter drill portion 4 comes into contact with it, the large-diameter drill portion 4 will collide with and bite hard into the shape steel 11. By this collision, an operator may hurt his wrist or the tapping screw may be broken at the boundary between the drill portions 4 and 5.

An ordinary light gage shape steel 11 has a thickness T of 2.3 mm. Thus, by setting the length ℓ of the tip drill portion 5 not more than 2.3 mm, the shape steel 11 is drilled by the large-diameter drill portion before the tip drill portion 5 passes through the shape steel 11. This allows smooth starting of drilling with the large-diameter drill portion 5 and thus can prevent trouble due to shock.

In drilling a starting hole with the tip drill portion 5 and the large-diameter drill portion 4, if the angle A' of the large-diameter drill portion 4 is set at 120 degrees as shown in Fig. 7, it will bite too deeply into the light gage shape steel 11, thus increasing the area which it has to chip off until the tip drill portion 5 passes therethrough. This will increase the resistance to the tapping screw and thus require a larger thrust to overcome the resistance.

In contrast, by setting the drill angle A of the large-diameter drill portion 4 at 90 degrees or smaller, it will not bite so deeply into the light gage shape steel 11 and drill a small-diameter starting hole at an angle of about 45 degrees. Thus, the resistance to the screw is kept small and a starting hole can be drilled smoothly in the shape steel 11 with the tip drill portion 5 and the large-diameter drill portion 4 without the need of applying a large thrust.

When the tip drill portion 5 and the large-diameter drill portion 4 have passed through the light gage steel 11, the screw shaft 3 will now penetrate into the starting hole, forming threads on the starting hole. Then the outer wall 12 is pressed and set in position by the head 2.

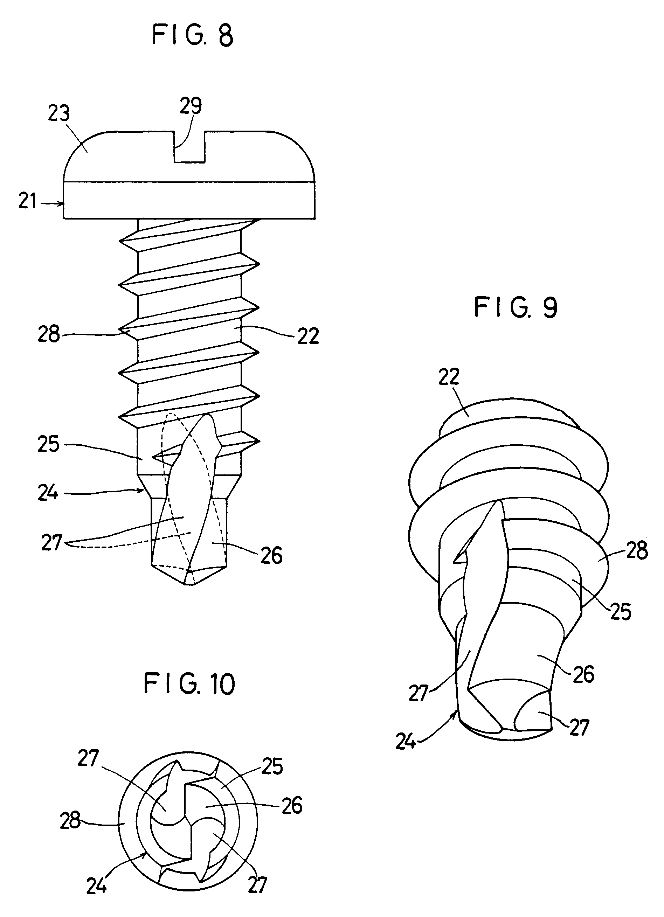

Figs. 8 - 10 show the second embodiment. As shown in FIg. 8, the tapping screw 21 of this embodiment has a screw shaft 22, a head 23 provided at one end of the shaft 22 and a drill portion 24 provided at the outer end thereof.

As shown in Figs. 8 - 10, the drill portion 24 is stepped so that its diameter reduces in steps toward the tip of the screw.

More specifically, the drill portion 24 comprises a large-diameter drill portion 25 integrally provided at the tip of the screw shaft 22 and having substantially the same diameter as the screw shaft and a small-diameter drill portion 26 integrally and concentrically provided at the tip of the large-diameter drill portion 25. The small-diameter drill portion 26 has a conical pointed end. Gullets 27 are provided in the surface of the drill portion 24 at both sides thereof so as to extend from the small-diameter drill portion 26 to the large-diameter drill portion 25.

In the illustrated embodiment, the large-diameter drill portion 25 is short and the lowermost thread 28 on the screw shaft 22 is divided by the inner ends of the gullets 27. But the large-diameter drill portion 25 may be so long that the gullets 27 may terminate short of the threads 28.

The difference in diameter between the large-diameter drill portion 25 and the small-diameter drill portion 26 is not limited but preferably the diameter of the small-diameter drill portion 26 should be 4 - 4.5 mm if the diameter of the large-diameter drill portion 25 is 6 mm.

The head 23 is shown to be provided with a groove 29 for receiving a driver. But it may be a hexagonal head. The drill portion 24 may comprise three or more drill portions arranged in a steplike manner.

The tapping screw of this embodiment is used for securing a construction material or any other article to a light gage shape steel. When threading, the small-diameter drill portion provided at the tip of the drill portion 24 is thrust into the light gage shape steel. When the small-diameter drill portion 26 has passed therethrough, the large-diameter drill portion 25 begins drilling a through hole in the light gage steel. The screw shaft 22 is threaded into the through hole, forming threads thereon.

In drilling such a hole with the tapping screw, the thrust force is distributed because the drill portion 24 has a multi-step structure. We shall discuss this in more detail below.

Suppose that 100 unit power is needed to drill a through hole in a light gage shape steel with a drill having a diameter of 6 mm while an operator can produce only a 70 unit power. Then it is impossible to drill a through hole in it. Thus, the drill may idle or its tip may seize. But a drill with a diameter of 4 mm can drill a through hole with a 44 unit power. Once a through hole is formed with this drill, a drill having a diameter of 6 mm can be thrust therethrough by applying a 54 unit power.

Even an operator who cannot drill a through hole 6 mm in diameter in a light gage shape steel at one operation can secure construction materials and other articles by using first a small-diameter drill and then drills having larger diameters. But this increases the number of steps and thus the working time. The drill portion 24 of the tapping screw 21 according to this invention has a multi-step structure wherein the diameter decreases in steps toward the tip. The small-diameter drill portion at the tip is thrust into a light gage shape steel. After the small-diameter drill portion 26 has passed therethrough, the large-diameter drill portion 25 is threaded in to drill a through hole. Thus, the tapping screw makes it possible to secure a construction material or any other material at one operation.

## Claims

1. A tapping screw (1;21) comprising a screw shaft (3a;22) and a drill portion (4,5;24) at the tip of the screw, the screw shaft (3a;22) carrying a screw thread (3b;28) and the drill portion having at least two coaxial sub-portions (4,5;25,26) having different diameters which decrease towards the tip of the tapping screw, characterised in that the outer diameter of the drill sub-portion (4;25) which has the largest diameter is smaller than the outer diameter of the screw thread (3b,28).

2. A tapping screw according to claim 1, wherein the drill sub-portions include a first sub-portion (4;25) at the tip of the screw shaft, and a second sub-portion (5;26) at the tip of the first sub-portion, the first and second sub-portions having different drill angles (A,B) from each other.

3. A tapping screw according to claim 2, wherein the drill angle of the second sub-portion (5) is 120 ± 5° and the drill angle of the first sub-portions (4) is smaller than the drill angle of the second sub portion (5).

4. A tapping screw according to claim 2 or claim 3, wherein the axial length of the second sub-portion (5) is not more than 2.3 mm.

## Patentansprüche

1. Selbstschneidende Schraube (1; 21), die ein Gewindeteil (3a; 22) und einen Bohrerabschnitt (4, 5; 24) an der Spitze der Schraube aufweist, wobei das Gewindeteil (3a; 22) einen Schraubengang (3b; 28) trägt und der Bohrerabschnitt mindestens zwei koaxiale Unterabschnitte (4, 5; 25, 26) mit verschiedenen Durchmessern aufweist, die zur Spitze der selbstschneidenden Schraube hin abnehmen, **dadurch gekennzeichnet, daß** der Außendurchmesser des Bohrerunterabschnitts (4; 25), der den größten Durchmesser hat, kleiner ist als der Außendurchmesser des Schraubengewindes (3b, 28).

2. Selbstschneidende Schraube nach Anspruch 1, bei der die Bohrerunterabschnitte einen ersten Unterabschnitt (4; 25) an der Spitze des Gewindeteils und einen zweiten Unterabschnitt (5; 26) an der Spitze des ersten Unterabschnitts umfassen, wobei der erste und der zweite Unterabschnitt voneinander verschiedene Bohrerwinkel (A, B) aufweisen.

3. Selbstschneidende Schraube nach Anspruch 2, bei der der Bohrerwinkel des zweiten Unterabschnitts (5) 120 ± 5° beträgt und der Bohrerwinkel des ersten Unterabschnitts (4) kleiner als der Bohrerwinkel des zweiten Unterabschnitts (5) ist.

4. Selbstschneidende Schraube nach Anspruch 2 oder Anspruch 3, bei der die axiale Länge des zweiten Unterabschnitts (5) nicht größer als 2,3 mm ist.

## Revendications

1. Vis autotaraudeuse (1; 21) comprenant une tige de vis (3a; 22) et une partie de perçage (4, 5; 24) à la pointe de la vis, la tige de vis (3a; 22) portant un filetage de vis (3b; 28) et la partie de perçage présentant au moins deux sous-parties coaxiales (4, 5; 25, 26) ayant des diamètres différents qui diminuent en direction de la pointe de la vis autotaraudeuse, caractérisée en ce que le diamètre extérieur de la sous-partie de perçage (4; 25) qui possède le plus grand diamètre, est plus petit que le diamètre extérieur du filetage de vis (3b; 28).

2. Vis autotaraudeuse selon la revendication 1, dans laquelle les sous-parties de perçage comprennent une première sous-partie (4; 25) à l'extrémité de la tige de vis, et une seconde sous-partie (5; 26) à l'extrémité de la première sous-partie, les première et seconde sous-parties ayant des angles de perçage (A, B) différents l'un de l'autre.

3. Vis autotaraudeuse selon la revendication 2, dans laquelle l'angle de perçage de la seconde sous-partie (5) est de 120 ± 5° et l'angle de perçage de la première sous-partie (4) est plus petit que l'angle de perçage de la seconde sous-partie (5).

4. Vis autotaraudeuse selon la revendication 2 ou la revendication 3, dans laquelle la longueur axiale de la seconde sous-partie (5) n'est pas supérieure à 2,3 mm.
